# EUROPÄISCHE PATENTSCHRIFT

(11) **EP 3 106 671 B1**
(45) Veröffentlichungstag und Bekanntmachung des Hinweises auf die Patenterteilung: **02.05.2018**
(21) Anmeldenummer: 16169108.4
(22) Anmeldetag: 11.05.2016
(51) Int. Cl.: F04D 27/00, G01F 5/00, G01F 15/12

(54) **DÜSENVORRICHTUNG MIT STAUBABSCHEIDER**
NOZZLE DEVICE WITH DUST SEPARATOR
DISPOSITIF DE BUSE DOTE D'UN SEPARATEUR DE POUSSIERES

(30) Priorität: 17.06.2015 DE 102015109684
(43) Veröffentlichungstag der Anmeldung: 21.12.2016
(73) Patentinhaber: ebm-papst Landshut GmbH, 84030 Landshut (DE)
(72) Erfinder: Dr. Dannemann, Jan, 84034 Landshut (DE); Dr. Keber, Roland, 84109 Wörth (DE); Sachsenhauser, Andreas, 84034 Landshut (DE); Schwalme, Jürgen, 84048 Mainburg (DE)
(74) Vertreter: Peter, Julian

(56) Entgegenhaltungen:
- WO-A1-2012/021999
- DE-B3- 10 349 344
- US-A1- 2013 014 573
- US-A1- 2013 098 484

## Beschreibung

Die Erfindung betrifft eine Düsenvorrichtung zur Luftförderung bei einem Gebläse, an der ein Staubascheider vorgesehen wird, um einen an der Düsenvorrichtung verwendeten Luftsensor mit von Feinstaub befreiter Luft zu beaufschlagen. Die Verwendung von Sensoren an Düsenvorrichtungen und Gebläsen ist aus dem Stand der Technik bekannt, siehe z. B. US2013/098484 A, beispielsweise um die geförderte Luftmenge zu messen und das Messergebnis als Regelgröße für das Gebläse zu verwenden. Besonders im Bereich von vormischenden Gas-Luft-Mischgebläsen ist die Luftmasse eine wichtige Regelgröße.
Dabei ist jedoch problematisch, dass die auf den Sensor wirkende Luft stets staubbelastet ist und den Sensor nach und nach verschmutzt. Insbesondere lagert sich über die Zeit Feinstaub auf dem Sensor ab, verfälscht das Messergebnis und mithin das gelieferte Signal.

Der Erfindung liegt deshalb die Aufgabe zugrunde, eine Düsenvorrichtung mit einem Sensor zur Messung eines Parameters der geförderten Luft bereit zu stellen, die derart ausgebildet ist, dass der Sensor vor Verschmutzung (Schmutzpartikel, Staub, Feinstaub) geschützt ist und somit dauerhaft unverfälschte Messergebnisse liefern kann.

Diese Aufgabe wird durch die Merkmalskombination gemäß Patentanspruch 1 gelöst.

Die erfindungsgemäße Düsenvorrichtung zur Luftförderung bei einem Gebläse umfasst ein Düsengehäuse mit einer Außenwandfläche, an der ein Staubabscheider mit mindestens einer Strömungseintrittsöffnung und mindestens einer Strömungsaustrittsöffnung vorgesehen ist. Die Strömungseintrittsöffnung ist über eine Gehäusewandöffnung mit einem Inneren der Düsenvorrichtung strömungsverbunden, so dass ein Teil der durch die Düsenvorrichtung geförderten Luft als Bypassströmung durch den Staubabscheider strömt. An der mindestens einen Strömungsaustrittsöffnung des Staubabscheiders ist der Sensor, vorzugsweise ein Massenstromsensor zur Messung des Luftmassenstroms derart angeordnet, dass die aus der mindestens einen Stromaustrittsöffnung strömende Bypassströmung von Feinstaub gereinigt unmittelbar auf den Sensor trifft.

Der Staubabscheider bildet einen Bypass für die Bypassströmung entlang der Außenwandfläche des Düsengehäuses. Dabei kann der Staubabscheider in einer Ausführungsform ein extra Bauteil sein, das an dem Düsengehäuse aufgesetzt und befestigt wird, jedoch wird bevorzugt, dass der Staubabscheider zumindest teilweise einteilig an dem Düsengehäuse ausgebildet ist. Dabei kann die Außenwandfläche des Düsengehäuses gleichzeitig eine Innenwandfläche des Staubabscheiders darstellen. Ferner ist günstig, wenn der Sensor ein Sensorgehäuse aufweist, das auf den Staubabscheider aufgesetzt wird und dabei eine Art Deckel bildet, so dass eine der Außenwandfläche des Düsengehäuses gegenüberliegende Wandfläche des Staubabscheiders durch das Sensorgehäuse bereit gestellt wird. Dies bietet der Vorteil einer kompakteren Bauweise und reduziert den Montage- und Kostenaufwand.

Nach dem Durchströmen des Staubabscheiders und dem Austritt aus der mindestens einen Strömungsaustrittsöffnung ist zwar vorgesehen, dass die Bypassströmung unmittelbar auf den Sensor auftritt. Dieser ist jedoch vorteilhafterweise gegenüber einer Ebene, die parallel zu einem Querschnitt der mindestens einen Strömungsaustrittsöffnung gebildet ist, schräg in einem Winkel von 10 - 30°, weiter bevorzugt 15 - 20° verlaufend angeordnet. Dadurch wird ein Abstand (Cosinus) zwischen den Messmitteln des Sensors zu der mindestens einen Strömungsaustrittsöffnung erzeugt, durch den die auf die Messmittel des Sensors treffende Strömung und mithin das von dem Sensor gelieferte Signal stabilisiert werden. Als Messmittel kommen für einen Massenstromsensor beispielsweise Pt100- und Pt-1000-Elemente zum Einsatz.

In einer vorteilhaften Ausführungsform ist der Staubascheider ein Feinstaub-Prallabscheider zum Abscheiden von Staubpartikeln mit einer Partikelgröße von kleiner als 10µm. Insbesondere der in der Umgebungsluft befindliche Feinstaub setzt sich mit der Zeit mehr und mehr an den Messmitteln des Sensors ab. Der Feinstaub verfälscht das Messergebnis und das von dem Sensor gelieferte Signal. Die Verwendung des Feinstaub-Prallabscheiders an der Düsenvorrichtung mit in der Konstruktion in Strömungsrichtung nachgeschaltetem Sensor löst dieses Problem, da dem Sensor ausschließlich von Feinstaub gereinigte Luft zugeführt wird. Der Feinstaub verbleibt im Feinstaub-Prallabscheider.

In einer vorteilhaften Ausführungsvariante weist der Feinstaub-Prallabscheider mehrere Prallplatten und mehrere Leitplatten auf, die in Strömungsrichtung abwechselnd und beabstandet angeordnet sind. Die Leitplatten weisen jeweils mindestens ein, vorzugsweise jedoch mehrere Düsenlöcher auf. An den Prallplatten ist jeweils mindestens ein Strömungsdurchgang mit gegenüber dem mindestens einen Düsenloch bzw. den mehreren Düsenlöchern vergrößertem Strömungsquerschnitt vorgesehen, so dass die Bypassströmung beim Strömen durch die Düsenlöcher jeweils eine Strahlströmung bildet und gegen eine Prallfläche der jeweils nachfolgenden Prallplatte prallt und an der Prallplatte über den mindestens einen Strömungsdurchgang mit geringerer Geschwindigkeit vorbeiströmt. Die abwechselnde Verwendung von Prallplatten jeweils mit Strömungsdurchgängen und Leitplatten jeweils mit Düsenlöchern beschleunigt die Bypassströmung durch die Düsenlöcher zu einer Strahlströmung, die mit hoher Geschwindigkeit gegen die in Strömungsrichtung nachfolgend angeordnete Prallplatte strömt bzw. prallt. Beim Anprall werden die Feinstaubpartikel abgeschieden und haften an der Prallplatte an. Die Bypassströmung verläuft weiter vorbei an der jeweiligen Prallplatte durch den im Querschnitt größeren Strömungsdurchgang mit verringerter Strömungsgeschwindigkeit, um anschließend wieder durch die Düsenlöcher der nachfolgenden Leitplatte und wiederum gegen die nächste Prallplatte zu strömen bzw. zu prallen. Der jeweilige Strömungsdurchgang wird in einer günstigen Ausführungsvariante an einem an die Außenwandfläche des Düsengehäuses angrenzenden Randabschnitt der Prallplatten ausgebildet. Alternativ können als Strömungsdurchgang auch gegenüber den Düsenlöchern vergrößerte Durchgangskanäle vorgesehen werden. Vorzugsweise sind die Düsenlöcher und die Strömungsdurchgänge jedoch in Strömungsrichtung derart beabstandet, dass die Bypassströmung an jeder Leitplatte und Prallplatte jeweils zumindest teilweise umgelenkt wird. Erfindungsgemäß werden in dem Staubabscheider vorzugsweise mindestens zwei Prallplatten mit jeweils dazwischen liegenden Leitplatten angeordnet.

In einem Ausführungsbeispiel der Erfindung, bei dem das Sensorgehäuse eine Wandfläche des Staubabscheiders bildet, ist günstigerweise vorgesehen, dass das Sensorgehäuse zumindest abschnittsweise eine Anprallfläche für die Bypassströmung bildet. Durch die Nutzung des Sensorgehäuses als Anprallfläche kann die Anzahl der Prallplatten reduziert oder die Wirksamkeit des Staubabscheiders weiter erhöht werden.

Auch wird in einer Ausführung der Erfindung vorgesehen, dass die mindestens eine Strömungsaustrittsöffnung einen größeren Querschnitt aufweist als das mindestens eine Düsenloch. Soweit mehrere Strömungsaustrittsöffnungen und/oder mehrere Düsenlöcher vorgesehen sind, ist der entweder der Einzelquerschnitt der Strömungsaustrittsöffnungen oder der Gesamtquerschnitt der Strömungsaustrittsöffnungen größer als derjenige der Düsenlöcher, um sicherzustellen, dass durch die Strömungsaustrittsöffnungen Strahlströmungen gegen den Sensor wirken, die keine Anhaftung von Feinstaub bewirken.

Zur Erhöhung der Staub-Abscheidewirkung ist bei der Düsenvorrichtung in einer vorteilhaften Variante berücksichtigt, dass die Prallfläche der Prallplatten und/oder die Anprallfläche des Sensorgehäuses eine Rauheit gemäß Oberflächenstruktur nach Richtlinie VDI 3400 aufweist bzw. aufweisen. Der hohe Rauheitswert begünstigt die Anhaftwirkung für Feinstaub. Zudem kann pro Fläche eine größere Menge Feinstaub gesammelt werden.

In einer Weiterbildung der Düsenvorrichtung ist vorgesehen, dass in ihren Lufteintrittsbereich ein Vorababscheider eingesetzt ist, der eine Düsenquerschnittsfläche lokal begrenzt verringert und derart ausgebildet ist, Fremdpartikel mit einer Größe von >400µm oder Fasern aus der geförderten Luft zu filtern. Dabei wird zwischen dem Vorabscheider und der Innenwandfläche des Düsengehäuses ein Ringspalt vorgesehen, der mit der mindestens einen Strömungseintrittsöffnung in den Staubabscheider strömungsverbunden ist. Die Größe des Ringspalts ist auf maximal 400µm dimensioniert, so dass keine Partikel oder Fasern mit einer Größe von >400µm passieren können. Die Bypassströmung durch den Staubabscheider ist somit frei von grobem Staub, Flusen und vergleichbaren Fremdkörpern.

Der Ringspalt bildet zwischen der Innenwandfläche des Düsengehäuses und dem Vorabscheider einen Strömungseinlass, der innerhalb der Düsenvorrichtung stromabwärts gegenüber der Strömungseintrittsöffnung positioniert ist. Dadurch wird die in den Ringspalt eintretende Strömung zunächst entgegen der Hauptströmung zurück und radial nach außen über die Strömungseintrittsöffnung in den Staubabscheider geführt.

Die Erfindung umfasst auch das Verfahren zum Messen eines durch die oben beschriebene Düsenvorrichtung durchströmenden Luftmassenstromes, bei dem ein Teil der geförderten Luft als Bypassströmung durch den an dem Düsengehäuse vorgesehenen Staubabscheider und durch die mindestens eine Strömungsaustrittsöffnung geführt wird, so dass die Bypassströmung unmittelbar auf den Sensor trifft. Anschließend wird die Bypassströmung in die Hauptströmung zurück geführt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht einer Düsenvorrichtung;
- Fig. 2: eine perspektivische Ansicht von Teilen der Düsenvorrichtung aus Figur 1, teilweise aufgeschnitten,
- Fig. 3: eine seitliche Schnittansicht der Düsenvorrichtung aus Figur 2;
- Fig. 4: eine Ansicht einer alternativen Ausführungsform einer Düsenvorrichtung;
- Fig. 5: eine Ansicht einer weiteren alternativen Ausführungsform einer Düsenvorrichtung.

Gleiche Bezugszeichen benennen gleiche Teile in allen Ausführungsbeispielen.

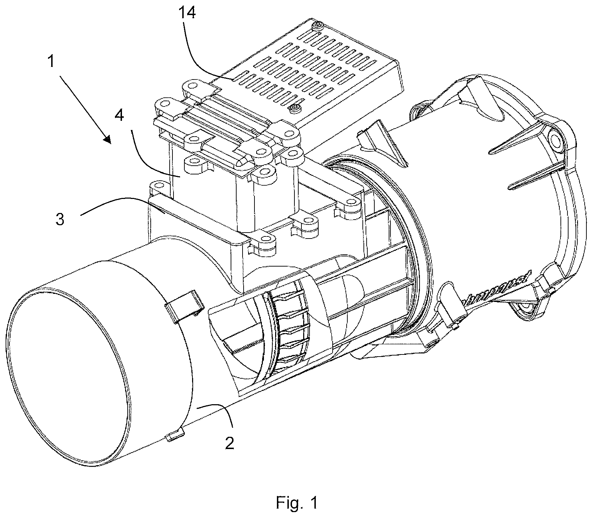

In Figur 1 ist in perspektivischer Ansicht eine Düsenvorrichtung 1 gezeigt, die einem Gebläse vor- oder nachgeschaltet zur Luftförderung eingesetzt wird. Die Düsenvorrichtung 1 weist ein Düsengehäuse 2 mit einer Außenwandfläche 3 auf, an der ein als Feinstaub-Prallabscheider zum Abscheiden von Staubpartikeln mit einer Partikelgröße von kleiner als 10µm ausgebildeter Staubabscheider 4 montiert ist. Auf dem Staubabscheider 4 ist ein Sensorgehäuse 14 mit darin aufgenommenen Sensor 8 befestigt. Der Staubascheider 4 sowie der Sensor 8 sind mit einer im Inneren der Düsenvorrichtung 1 verlaufenden Hauptströmung strömungsverbunden, so dass eine Bypassströmung durch den Staubabscheider 4 über den Sensor 8 und zurück zur Hauptströmung gewährleistet ist.

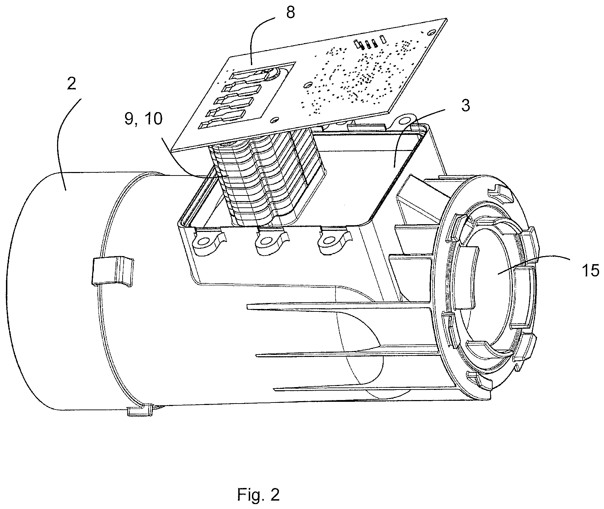

In Figur 2 ist die Düsenvorrichtung aus Figur 1 gezeigt, wobei das Gehäuse des Staubabscheiders 4 sowie das Sensorgehäuse 14 entfernt sind. Der Staubabscheider 4 ist teilweise einteilig an der Außenwandfläche 3 des Düsengehäuses 2 ausgebildet und weist zur Staubabscheidung mehrere übereinander sowie in Reihe angeordnete Leitplatten 9 und Prallplatten 10 auf. Der Sensor 8 ist auf dem Stapel aus Leitplatten 9 und Prallplatten 10 in Strömungsrichtung direkt nachgeschaltet angeordnet, so dass die Bypassströmung unmittelbar auf an dem Sensor 8 vorgesehene Messmittel trifft.

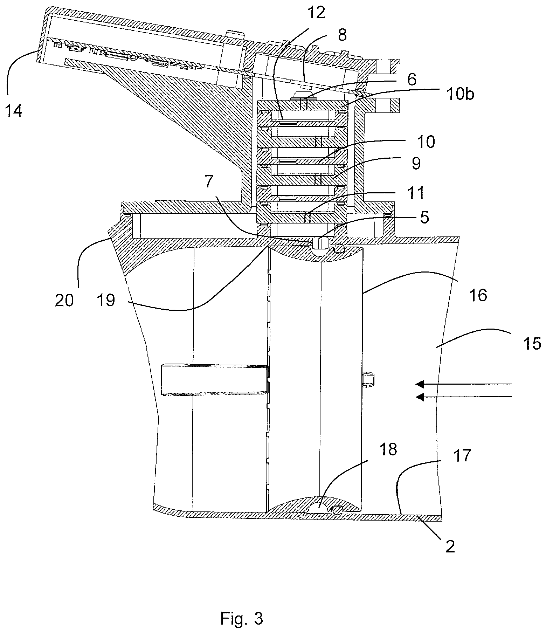

In Figur 3 ist der Aufbau der Düsenvorrichtung 1 aus Figur 1 in einer seitlichen Schnittansicht dargestellt. Im Inneren der Düsenvorrichtung 1 ist ein Vorabscheider 16 eingesetzt. An dem Düsengehäuse 2 ist eine Gehäusewandöffnung 7 ausgebildet, die sich als Strömungseintrittsöffnung 5 des Staubabscheiders 4 für den Eintritt der Bypassströmung anschließt.

Zwischen dem Vorabscheider 16 und der Innenwandfläche 17 des Düsengehäuses 2 ist ein Ringspalt 18 als Strömungseinlass 19 vorgesehen, der in der Düsenvorrichtung 1 stromabwärts gegenüber der Strömungseintrittsöffnung 5 positioniert ist. Der Ringspalt 18 weist eine Größe von maximal 400µm auf, um größere Partikel wie Flusen und dergleichen zu filtern.

Die abwechselnd in Reihe angeordneten Prallplatten 10 und Leitplatten 9 bieten einen Strömungsdurchgang für die Bypassströmung bis hin zum Sensor 8. Dabei weisen die Leitplatten 9 jeweils mehrere Düsenlöcher 11 und die Prallplatten 10 jeweils einen Strömungsdurchgang 12 mit gegenüber dem Gesamtquerschnitt der Düsenlöcher 11 vergrößertem Strömungsquerschnitt auf. Dies führt dazu, dass die Bypassströmung beim Strömen durch die Düsenlöcher 11 jeweils eine beschleunigte Strahlströmung bildet und gegen die jeweils nachfolgende Prallplatte 10 mit hoher Geschwindigkeit prallt. An der Prallplatte 10 strömt die Bypassströmung anschließend über den vergleichsweise größeren Strömungsdurchgang 12 langsamer als durch die Düsenlöcher 11 vorbei. Dieser Vorgang wiederholt sich von jeder Leitplatte 9 zu der jeweils nachfolgenden Prallplatte 10 bis zum Sensor 8. An der in der Zeichnung dargestellten obersten Prallplatte 10b sind mehrere Strömungsaustrittsöffnungen 6 vorgesehen, die einen gegenüber den vorhergehenden Düsenlöchern 11 größeren Gesamtquerschnitt aufweisen, um eine geringere Düsen- und Anprallwirkung der Bypassströmung und mithin eine beschleunigte Strahlströmung gegen die in Strömungsrichtung gesehen nachfolgenden Sensor 8 zu bewirken. Dadurch wird ausgeschlossen, dass es zu Anhaftungen von Feinstaub an dem Sensor 8 kommt.

Der Sensor 8 ist gegenüber der parallel zu dem Querschnitt der Strömungsaustrittsöffnung 6 gebildeten Ebene schräg in einem Winkel von 15° verlaufend angeordnet. Dabei werden die Messmittel des Sensors 8 von einer stabilen Strömung umströmt und liefern ein stabiles Signal. Über Kanäle 20 wird die Bypassströmung zurück zur Hauptströmung geführt.

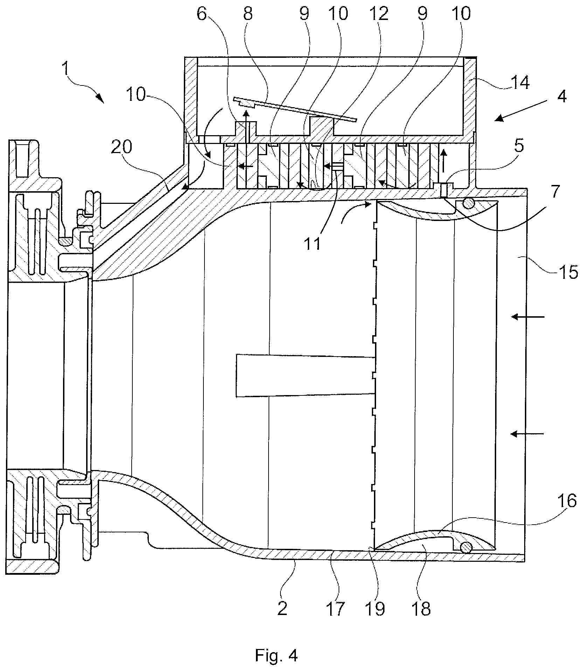

Figur 4 zeigt eine weitere Ausführungsvariante der Erfindung, wobei die wesentlichen Merkmale zu denen aus Figur 3 übereinstimmen und im Folgenden nur Unterschiede beschrieben sind. Die übrigen Merkmale gelten als identisch zu den oben Beschriebenen gelöst. In dem Ausführungsbeispiel sind die Leitplatten 9 und die Prallplatten 10 des Staubabscheiders 4 in axialer Richtung parallel zur Haupt-Strömungsrichtung nacheinander angeordnet. Der Strömungsdurchgang 12 wird durch einen Abstand zwischen der jeweiligen Prallplatte 10 und der Außenwandfläche 3 des Düsengehäuses 2 realisiert. In dem Gehäuse des Staubabscheiders 4 sind Aufnahmen vorgesehen, die ein Einschieben und Halten der Leitplatten 9 und Prallplatten 10 an vorbestimmten, in Strömungsrichtung beabstandeten Positionen ermöglichen.

Das Sensorgehäuse 14 bildet eine Seitenwand, d.h. die obere Abdeckung des Staubabscheiders 4. Die Strömungseintrittsöffnung 5 ist derart in Richtung des Sensorgehäuses 14 gerichtet, dass dieses eine erste Anprallfläche für die Bypassströmung darstellt. Anschließend strömt die Bypassströmung über den ersten Strömungsdurchgang 12 vorbei an der ersten Prallplatte 10 zur ersten Leitplatte 9. Der Weg der Bypassströmung ist zum leichteren Verständnis durch Pfeile dargestellt.

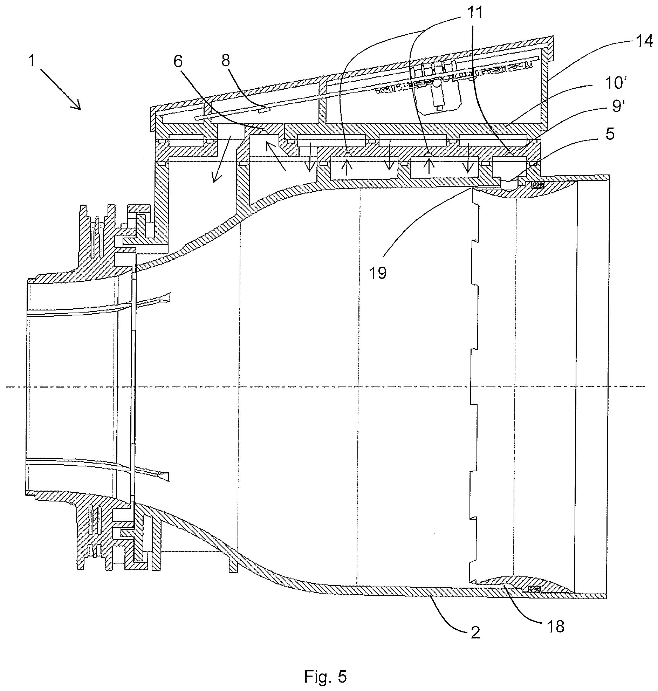

Figur 5 zeigt eine weitere alternative Ausführungsvariante der Erfindung, die im Wesentlichen mit der Ausführung aus Figur 4 übereinstimmt und im Folgenden nur Unterschiede beschrieben sind. Die übrigen Merkmale gelten als identisch zu den oben Beschriebenen gelöst. In dem Ausführungsbeispiel sind die Leitplatten 9 und die Prallplatten 10 des Staubabscheiders 4 senkrecht zur axialen Richtung und senkrecht zur Haupt-Strömungsrichtung angeordnet, so dass die Strömung durch den Staubabscheider 4 nicht wie bei einer Ausführung gemäß Figur 4 parallel zur Strömung, sondern senkrecht hierzu geleitet wird. Die Prallplatte 9' und die Leitplatte 10' sind jeweils einteilig ausgebildet und erstrecken sich eben parallel zur Hauptachse. Die Leitplatte 10' ist unmittelbar auf die Prallplatte 9' aufgelegt. In der Leitplatte 9' sind mehrere Düsenlöcher 11 vorgesehen, durch die die Bypassströmung in durch die Leitplatte 10' und Prallplatte 9' gebildete Kammern gelangt und an die Leitplatte 10' prallt. Zwischen der Prallplatte 9' und dem Gehäuse 2 sind in Axialrichtung nebeneinander weitere Kammern ausgebildet, in welche die Bypassströmung durch jeweiligen Strömungsdurchgänge (nicht gezeigt) in der Prallplatte 9' gelangt. Dieser Vorgang wiederholt sich von Kammer zu Kammer, wobei die Bypassströmung jeweils durch die Düsenlöcher 11 mit gegenüber den Strömungsdurchgängen reduzierten Durchmessern beschleunigt gegen die Leitplatte 10' prallt. Anschließend verlangsamt sich die Bypassströmung in der nachfolgenden Kammer. Die Rückführung der Bypassströmung nach Passieren des Sensors 8 in die Hauptströmung erfolgt wie in der Ausführung gemäß Figur 4.

Das Sensorgehäuse 14 nimmt den Sensor 8 auf und ist einteilig mit der Leitplatte 10' ausgebildet. Der Weg der Bypassströmung ist zum leichteren Verständnis durch Pfeile dargestellt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können die Düsenlöcher speziell düsenförmig ausgebildet werden, um die Düsenwirkung zu vergrößern und eine möglichst hoch beschleunigte Strahlströmung zu erreichen.

## Patentansprüche

1. Düsenvorrichtung zur Luftförderung bei einem Gebläse, umfassend:
ein Düsengehäuse (2) mit einer Außenwandfläche (3), wobei an der Außenwandfläche (3) ein Staubabscheider (4) mit mindestens einer Strömungseintrittsöffnung (5) und mindestens einer Strömungsaustrittsöffnung (6) vorgesehen ist und die mindestens eine Strömungseintrittsöffnung (5) über mindestens eine Gehäusewandöffnung (7) mit einem Inneren der Düsenvorrichtung (1) strömungsverbunden ist, so dass ein Teil der durch die Düsenvorrichtung (1) geförderten Luft als Bypassströmung durch den Staubabscheider (4) strömt,
wobei an der mindestens einen Strömungsaustrittsöffnung (6) des Staubabscheiders (4) ein Sensor (8) zur Messung von Parametern der geförderten Luft derart angeordnet ist, dass die aus der mindestens einen Stromaustrittsöffnung (6) des Staubabscheiders (4) strömende Bypassströmung unmittelbar auf den Sensor (8) trifft.

2. Düsenvorrichtung nach Anspruch 1, **dadurch gekennzeichnet, dass** der Sensor (8) ein Massenstromsensor ist.

3. Düsenvorrichtung nach Anspruch 1 oder 2, **dadurch gekennzeichnet, dass** der Staubabscheider (4) zumindest teilweise einteilig an dem Düsengehäuse (2) ausgebildet ist.

4. Düsenvorrichtung nach zumindest einem der vorigen Ansprüche, **dadurch gekennzeichnet, dass** der Sensor (8) gegenüber einer Ebene, die parallel zu einem Querschnitt der mindestens einen Strömungsaustrittsöffnung (6) gebildet ist, schräg in einem Winkel von 10 - 30° verlaufend angeordnet ist.

5. Düsenvorrichtung nach zumindest einem der vorigen Ansprüche, **dadurch gekennzeichnet, dass** der Staubascheider (4) ein Feinstaub-Prallabscheider zum Abscheiden von Staubpartikeln mit einer Partikelgröße von kleiner als 10µm ist.

6. Düsenvorrichtung nach dem vorigen Anspruch, **dadurch gekennzeichnet, dass** der Feinstaub-Prallabscheider mehrere Prallplatten (10) und mehrere Leitplatten (9) aufweist, die in einer Strömungsrichtung abwechselnd und beabstandet angeordnet sind, wobei die Leitplatten (9) mindestens ein Düsenloch (11) und die Prallplatten (10) mindestens einen Strömungsdurchgang (12) mit gegenüber dem mindestens einen Düsenloch (11) vergrößertem Strömungsquerschnitt aufweisen, so dass die Bypassströmung beim Strömen durch das mindestens eine Düsenloch (11) jeweils eine Strahlströmung bildet und gegen eine Prallfläche der jeweils in Strömungsrichtung nachfolgenden Prallplatte (10) prallt und an der jeweiligen Prallplatte (10) über den mindestens einen Strömungsdurchgang (12) vorbeiströmt.

7. Düsenvorrichtung nach dem vorigen Anspruch, **dadurch gekennzeichnet, dass** der mindestens eine Strömungsdurchgang (12) an einem an die Außenwandfläche des Düsengehäuses (2) oder eines Staubabscheidergehäuses (13) angrenzenden Randabschnitt der Prallplatten (10) ausgebildet ist.

8. Düsenvorrichtung nach Anspruch 5, **dadurch gekennzeichnet, dass** der Feinstaub-Prallabscheider mindestens eine Prallplatte (10') und mindestens eine Leitplatte (9') aufweist, die senkrecht zur Strömungsrichtung aufeinander liegend angeordnet sind, wobei die mindestens eine Leitplatte (9') mindestens ein Düsenloch (11) und mindestens einen Strömungsdurchgang (12) mit gegenüber dem mindestens einen Düsenloch (11) vergrößertem Strömungsquerschnitt aufweist, so dass die Bypassströmung beim Strömen durch das mindestens eine Düsenloch (11) jeweils eine Strahlströmung bildet und gegen eine Prallfläche der in Strömungsrichtung nachfolgenden Prallplatte (10') prallt.

9. Düsenvorrichtung nach zumindest einem der vorigen Ansprüche, **dadurch gekennzeichnet, dass** der Sensor (8) ein Sensorgehäuse (14) aufweist, über das der Sensor (8) an dem Staubascheider (4) strömungsverbunden befestigbar ist, wobei das Sensorgehäuse (14) zumindest abschnittsweise eine Anprallfläche für die Bypassströmung bildet.

10. Düsenvorrichtung nach einem der vorigen Ansprüche 6 bis 9, **dadurch gekennzeichnet, dass** die mindestens eine Strömungsaustrittsöffnung (6) einen größeren Querschnitt aufweist als das mindestens eine Düsenloch (11).

11. Düsenvorrichtung nach zumindest einem der vorigen Ansprüche, **dadurch gekennzeichnet, dass** sie einen Lufteintrittsbereich (15) aufweist, in den ein Vorababscheider (16) eingesetzt ist, der eine Düsenquerschnittsfläche lokal begrenzt verringert und ausgebildet ist, Fremdpartikel mit einer Größe größer als 400µm aus der geförderten Luft zu filtern.

12. Düsenvorrichtung nach dem vorigen Anspruch, **dadurch gekennzeichnet, dass** zwischen dem Vorabscheider (16) und einer Innenwandfläche (17) des Düsengehäuses (2) ein Ringspalt (18) vorgesehen ist, der mit der mindestens einen Strömungseintrittsöffnung (5) strömungsverbunden ist.

13. Düsenvorrichtung nach dem vorigen Anspruch, **dadurch gekennzeichnet, dass** der Ringspalt (18) als Strömungseinlass (19) ausgebildet ist, der zwischen der Innenwandfläche des Düsengehäuses (2) und dem Vorabscheider (16) gebildet ist, wobei der Strömungseinlass (19) in der Düsenvorrichtung (1) stromabwärts gegenüber Strömungseintrittsöffnung (5) positioniert ist.

14. Düsenvorrichtung nach zumindest einem der vorigen Ansprüche 9 bis 13, **dadurch gekennzeichnet, dass** das Sensorgehäuse (14) auf den Staubabscheider (4) aufsetzbar ist und eine Seitenwand des Staubascheiders (4) bildet.

15. Verfahren zum Messen eines eine Düsenvorrichtung (1) nach einem der vorigen Ansprüche durchströmenden Luftmassenstromes, bei dem ein Teil der geförderten Luft als Bypassströmung durch den an dem Düsengehäuse (2) vorgesehenen Staubabscheider (4) und durch die mindestens eine Strömungsaustrittsöffnung (5) geführt wird, so dass die Bypassströmung unmittelbar auf den Sensor (8) trifft.

## Claims

1. Nozzle device for conveying air at a ventilator, comprising:
a nozzle housing (2) having an outer wall area (3) wherein at the outer wall area (3) a dust collector (4) having at least one flow inlet opening (5) and at least one flow outlet opening (6) is provided and the at least one flow inlet opening (5) is flow-connected by at least one housing wall opening (7) with an interior of the nozzle device (1) so that a part of the air transported through the nozzle device (1) flows through the dust collector (4) as bypass-flow, wherein at the at least one flow outlet opening (6) of the dust collector (4) a sensor (8) for measuring parameters of the transported air is disposed in such a way that the bypass-flow streaming from the at least one flow outlet opening (6) of the dust collector (4) impacts directly on the sensor (8).

2. Nozzle device according to claim 1, **characterized in that** the sensor (8) is a mass flow sensor.

3. Nozzle device according to claim 1 or 2, **characterized in that** the dust collector (4) is formed at least partially integral at the nozzle housing (2).

4. Nozzle device according to at least one of the preceding claims, **characterized in that** the sensor (8) compared to a section formed parallel to a cross section of the at least one flow outlet opening (6) is disposed transversal at an angle of 10 - 30°.

5. Nozzle device according to at least one of the preceding claims, **characterized in that** the dust collector (4) is a particulate matter inertial separator to separate dust particles with a particle size of smaller than 10µm.

6. Nozzle device according to the preceding claim, **characterized in that** the particulate matter inertial separator has several impact plates (10) and several guide plates (9) disposed alternately spaced apart in a flow-direction, wherein the guide plates (9) have at least one nozzle hole (11) and the impact plates (10) have at least one flow-passage (12) having an increased flow-cross-section compared to the at least one nozzle hole (11) such that the bypass-flow while streaming through the at least one nozzle hole (11) respectively forms a jet flow and impacts on an impact area of the respectively subsequent impact plate (10) in flow-direction and at the respective impact plate (10) streams past the respective impact plate (10) over the at least one flow-passage (12).

7. Nozzle device according to the preceding claim, **characterized in that** the at least one flow-passage (12) is formed at an edge section of the impact plates (10) adjacent to the outer wall area of the nozzle housing (2) or of a dust collector housing (13).

8. Nozzle device according to claim 5, **characterized in that** the particulate matter dust collector has at least one impact plate (10') and at least one guide plate (9') being disposed vertically to the flow-direction lying on each other, wherein the at least one guide plate (9') has at least one nozzle hole (11) and at least one flow-passage (12) having an increased flow-cross-section opposite the at least one nozzle hole (11) such that the bypass-flow while streaming through the at least one nozzle hole (11) respectively forms a jet flow and impacts on an impact area of the impact plate (10') following in flow-direction.

9. Nozzle device according to at least one of the preceding claims, **characterized in that** the sensor (8) has a sensor housing (14) through which the sensor (8) is flow-connected attachable to the dust collector (4) wherein the sensor housing (14) forms at least partially an impact area for the bypass-flow.

10. Nozzle device according to one of the preceding claims 6 to 9, **characterized in that** the at least one flow outlet opening (6) has a larger cross section than the at least one nozzle hole (11).

11. Nozzle device according to at least one of the preceding claims, **characterized in that** it has an air entry zone (15) in which a pre-collector (16) is inserted which locally decreases a nozzle cross section area and is formed to filter foreign particles with a size larger than 400 µm from the transported air.

12. Nozzle device according to the preceding claim, **characterized in that** between the pre-collector (16) and an inner wall area (17) of the nozzle housing (2) an annular gap (18) is provided which is flow-connected with the at least one flow inlet opening (19).

13. Nozzle device according to the preceding claim, **characterized in that** the annual gap (18) is formed as a flow inlet (19) which is formed between the inner wall area of the nozzle housing (2) and the pre-collector (16) wherein the flow inlet (19) in the nozzle device (1) is positioned downstream compared to the flow inlet opening (5).

14. Nozzle device according to at least one of the preceding claims 9 to 13, **characterized in that** the sensor housing (14) is attachable to the dust collector (4) and forms a side wall of the dust collector (4).

15. Method for measuring an air-mass flow streaming through a nozzle device (1) according to one of the preceding claims, wherein a portion of the transported air is guided as a bypass-flow through the dust collector (4) provided at the nozzle housing (2) and through the at least one flow outlet opening (5) so that the bypass-flow directly impacts on the sensor (8).

## Revendications

1. Dispositif de buse pour le transport d'air dans un ventilateur, comprenant :
un boîtier de buse (2) avec une surface de paroi extérieure (3), dans lequel un séparateur de poussières (4) avec au moins une ouverture d'entrée d'écoulement (5) et au moins une ouverture de sortie d'écoulement (6) est prévue au niveau de la surface de paroi extérieure (3) et l'au moins une ouverture d'entrée d'écoulement (5) est en communication fluidique avec un intérieur du dispositif de buse (1) par le biais d'au moins une ouverture de paroi de boîtier (7), de sorte qu'une partie de l'air transporté à travers le dispositif de buse (1) s'écoule en tant qu'écoulement de dérivation à travers le séparateur de poussières (4),
dans lequel un capteur (8) de mesure de paramètres de l'air transporté est agencé au niveau de l'au moins une ouverture de sortie d'écoulement (6) du séparateur de poussières (4) de sorte que l'écoulement de dérivation s'écoulant de l'au moins une ouverture de sortie d'écoulement (6) du séparateur de poussières (4) touche directement le capteur (8).

2. Dispositif de buse selon la revendication 1, **caractérisé en ce que** le capteur (8) est un capteur de débit massique.

3. Dispositif de buse selon la revendication 1 ou 2, **caractérisé en ce que** le séparateur de poussières (4) est réalisé au moins en partie d'une seule pièce au niveau du boîtier de buse (2).

4. Dispositif de buse selon au moins l'une quelconque des revendications précédentes, **caractérisé en ce que** le capteur (8) est agencé en oblique selon un angle de 10 - 30° par rapport à un plan, qui est formé parallèlement à une section transversale de l'au moins une ouverture de sortie d'écoulement (6).

5. Dispositif de buse selon au moins l'une quelconque des revendications précédentes, **caractérisé en ce que** le séparateur de poussières (4) est un séparateur à impact de poussières fines pour la séparation de particules de poussière d'une taille de particule inférieure à 10 µm.

6. Dispositif de buse selon la revendication précédente, **caractérisé en ce que** le séparateur à impact de poussières fines présente plusieurs déflecteurs (10) et plusieurs plaques de guidage (9), qui sont agencés espacés et en alternance dans un sens d'écoulement, dans lequel les plaques de guidage (9) présentent au moins un orifice de buse (11) et les déflecteurs (10) au moins un passage d'écoulement (12) à section transversale d'écoulement agrandie par rapport à l'au moins un orifice de buse (11), de sorte que lors de l'écoulement à travers l'au moins un orifice de buse (11), l'écoulement de dérivation forme respectivement un écoulement par jet et heurte une surface d'impact du déflecteur (10) respectivement en aval dans le sens d'écoulement et passe le déflecteur (10) respectif par le biais de l'au moins un passage d'écoulement (12).

7. Dispositif de buse selon la revendication précédente, **caractérisé en ce que** l'au moins un passage d'écoulement (12) est réalisé au niveau d'une section de bord des déflecteurs (10) adjacente à la surface de paroi extérieure du boîtier de buse (2) ou d'un boîtier de séparateur de poussières (13).

8. Dispositif de buse selon la revendication 5, **caractérisé en ce que** le séparateur à impact de poussières fines présente au moins un déflecteur (10') et au moins une plaque de guidage (9'), qui sont agencés l'un sur l'autre perpendiculairement au sens d'écoulement, dans lequel l'au moins une plaque de guidage (9') présente au moins un orifice de buse (11) et au moins un passage d'écoulement (12) à section transversale d'écoulement agrandie par rapport à l'au moins un orifice de buse (11), de sorte que lors de l'écoulement à travers l'au moins un orifice de buse (11), l'écoulement de dérivation forme respectivement un écoulement par jet et heurte une surface d'impact du déflecteur (10') en aval dans le sens d'écoulement.

9. Dispositif de buse selon au moins l'une quelconque des revendications précédentes, **caractérisé en ce que** le capteur (8) présente un boîtier de capteur (14), par le biais duquel le capteur (8) peut être fixé en communication fluidique au séparateur de poussières (4), dans lequel le boîtier de capteur (14) forme au moins par section une surface d'impact pour l'écoulement de dérivation.

10. Dispositif de buse selon l'une quelconque des revendications précédentes 6 à 9, **caractérisé en ce que** l'au moins une ouverture de sortie d'écoulement (6) présente une section transversale plus grande que l'au moins un orifice de buse (11).

11. Dispositif de buse selon au moins l'une quelconque des revendications précédentes, **caractérisé en ce qu'**il présente une zone d'entrée d'air (15), dans laquelle un préséparateur (16) est inséré, qui réduit de manière localement limitée une section transversale de buse et est réalisé pour filtrer des particules étrangères d'une taille supérieure à 400 µm de l'air transporté.

12. Dispositif de buse selon la revendication précédente, **caractérisé en ce qu'**une fente annulaire (18), qui est en communication fluidique avec l'au moins une ouverture d'entrée d'écoulement (5), est prévue entre le préséparateur (16) et une surface de paroi intérieure (17) du boîtier de buse (2).

13. Dispositif de buse selon la revendication précédente, **caractérisé en ce que** la fente annulaire (18) est réalisée en tant qu'entrée d'écoulement (19), qui est formée entre la surface de paroi intérieure du boîtier de buse (2) et le préséparateur (16), dans lequel l'entrée d'écoulement (19) est positionnée dans le dispositif de buse (1) en aval par rapport à l'ouverture d'entrée d'écoulement (5).

14. Dispositif de buse selon au moins l'une quelconque des revendications précédentes 9 à 13, **caractérisé en ce que** le boîtier de capteur (14) peut être posé sur le séparateur de poussières (4) et forme une paroi latérale du séparateur de poussières (4)

15. Procédé de mesure d'un débit massique d'air traversant un dispositif de buse (1) selon l'une quelconque des revendications précédentes, dans lequel une partie de l'air transporté est guidée en tant qu'écoulement de dérivation à travers le séparateur de poussières (4) prévu au niveau du boîtier de buse (2) et à travers l'au moins une ouverture de sortie d'écoulement (5), de sorte que l'écoulement de dérivation touche directement le capteur (8).
